# EUROPÄISCHE PATENTANMELDUNG

(11) **EP 3 757 715 A1**
(43) Veröffentlichungstag der Anmeldung: **30.12.2020**
(21) Anmeldenummer: 20173811.9
(22) Anmeldetag: 11.05.2020
(51) Int. Cl.: G06F 1/16, G06F 3/041

(54) **TOUCHSCREEN**

(30) Priorität: 24.06.2019 DE 102019116909
(71) Anmelder: Jugendforschungszentrum Schwarzwald-Schönbuch e.V., 72202 Nagold (DE)
(72) Erfinder: Schaffner, Maximilian, 72148 Eutingen im Gäu (DE); Schaffner, Christian, 72148 Eutingen im Gäu (DE)
(74) Vertreter: Späth, Dieter

(57) **Zusammenfassung**

Um Einzelteile eines Touchscreens (3) einzeln tauschen zu können schlägt die Erfindung vor, eine transparente Trägerplatte (10) mit aufgeklebter Glasplatte als Schutzschicht (09), ein Touchpad (11) und einen Flachbildschirm (12), die als Schichten gestapelt aufeinander angeordnet sind, mit elastischen Rastelementen (15) an Rändern des Touchscreens (3) zerstörungsfrei lösbar miteinander zu verbinden.

## Beschreibung

Die Erfindung betrifft einen Touchscreen mit den Merkmalen des Oberbegriffs des Anspruchs 1. Des weiteren betrifft die Erfindung ein Tablet, Smartphone oder ein elektronisches Navigationsgerät mit einem solchen Touchscreen. Ein Touchscreen ist ein plattenförmiger, berührungsempfindlicher Bildschirm als Ein- und Ausgabeeinheit eines elektronischen Gerätes, insbesondere eines Computers. Ein Tablet ist ein plattenförmige Computer und ein Smartphone ein Mobiltelefon (umgangssprachlich: Handy) jeweils mit einem Touchscreen als Ein- und Ausgabeeinheit.

Touchscreens sind üblicherweise Schichtverbundteile mit einem Flachbildschirm, einem Touchpad und einer transparenten Schutzschicht, die stoffschlüssig beispielsweise durch Kleben unlösbar miteinander verbunden sind. Ein Touchscreen kann weitere Elemente oder Schichten aufweisen. "Unlösbar" bedeutet, dass der Flachbildschirm, das Touchpad und die Schutzschicht sich nicht voneinander lösen lassen ohne sie zu zerstören. Bei einer Beschädigung eines der Elemente muss der Touchscreen als Ganzes ausgetauscht werden.

Aufgabe der Erfindung ist einen Touchscreen vorzuschlagen, dessen Elemente oder jedenfalls ein Teil seiner Elemente einzeln getauscht werden können.

Gelöst wird diese Aufgabe durch die Merkmale des Anspruchs 1. Der erfindungsgemäße Touchscreen weist einen Flachbildschirm, ein Touchpad und eine transparente Schutzschicht auf, die als Schichten gestapelt aufeinander angeordnet sind. Die Schutzschicht befindet sich auf einer Seite des Flachbildschirms und des Touchpads, der Flachbildschirm kann sich auf der Seite der Schutzschicht des Touchpads oder auf einer der Schutzschicht abgewandten Seite des Touchpads befinden. Der Touchscreen kann weitere Elemente oder Schichten zwischen dem Flachbildschirm, dem Touchpad und/oder der Schutzschicht oder auf einer oder beiden Außenseiten aufweisen.

Das Touchpad kann auch als Tastfeld bezeichnet werden und ist eine Folie oder ein plattenförmiges, berührungsempfindliches Element, mit dem ein Ort einer Berührung der Schutzschicht des Touchscreens mit beispielsweise einem Finger festgestellt werden kann.

Der Flachbildschirm ist ein plattenförmiger Bildschirm. Er kann flexibel, auch eine Folie sein.

Die Schutzschicht ist eine Scheibe aus Glas oder eine Folie oder Platte aus Kunststoff mit einer kratzfesten Oberfläche. "Kratzfest" bedeutet, dass sie einen hohen Widerstand gegen ein Verursachen von Kratzern durch Berühren der und Gleiten auf der Schutzschicht mit beispielsweise einem Finger, einem Fingernagel, einem Kunststoffstift auf der Schutzschicht aufweist. Die Kratzfestigkeit der Schutzschicht ist jedenfalls höher als die des Touchpads und des Flachbildschirms. "Transparent" bedeutet eine Durchsichtigkeit der Schutzschicht derart, dass Darstellungen wie Bilder und Schrift auf dem Flachbildschirm möglichst ohne Beeinträchtigung erkennbar und lesbar sind.

Erfindungsgemäß sind der Flachbildschirm, das Touchpad und die Schutzschicht zerstörungsfrei voneinander lösbar miteinander verbunden. Der Flachbildschirm kann weitere Schichten oder Elemente aufweisen, die zerstörungsfrei lösbar mit ihm verbunden sind. Insbesondere sind der Flachbildschirm, das Touchpad, die Schutzschicht und etwaige weitere Schichten oder Elemente von Hand ohne Werkzeug oder einem Schraubendreher oder dergleichen als Hebel zu einem außer Eingriff Bringen von beispielsweise Rastelementen voneinander lösbar.

Ein Vorteil der Erfindung ist, dass der Flachbildschirm, das Touchpad die Schutzschicht und eventuell weitere Schichten oder Elementen des Touchscreens einzeln gewechselt werden können.

Verbinder, die den Flachbildschirm, das Touchpad, die Schutzschicht und eventuell weitere Schichten oder Elemente des Touchscreens zerstörungsfrei lösbar miteinander verbinden, sind vorzugsweise an einem Rand außerhalb eines Sichtfelds des Touchscreens angeordnet.

Beispielsweise weist der Touchscreen Rastelemente als Verbinder auf, die durch elastische Verformung außer Eingriff von Widerlagern, Gegenelementen oder dergleichen bringbar sind um die Elemente oder Schichten des Touchscreens voneinander zu lösen.

Eine Weiterbildung der Erfindung sieht vor, dass der Touchscreen ein Gehäuse aufweist, mit dem er beziehungsweise seine Schichten oder Elemente lösbar verbunden sind. Der Touchscreen kann eine Art Deckel bilden, der ein beispielsweise schachtelförmiges und an einer Deckseite offenes Gehäuse verschließt. Das Gehäuse kann einstückig oder mehrteilig sein, es kann beispielsweise einen Gehäuserahmen, der Längs- und Querwände des Gehäuses aufweist, und einen Boden aufweisen, der das Gehäuse bzw. den Gehäuserahmen auf einer dem Touchscreen gegenüberliegenden Seite verschließt.

Zur Versteifung des Touchscreens sieht eine Ausgestaltung der Erfindung eine transparente Trägerplatte vor, die den Touchscreens als zusätzliche Schicht versteift und die steifer als der Flachbildschirm, das Touchpad oder die Schutzschicht sein kann. Trotzdem kann die Trägerplatte und der Touchscreen insgesamt elastisch, insbesondere begrenzt biegbar und/oder in sich verdrehbar sein.

Bei Ausgestaltungen der Erfindung kann die Trägerplatte eine undurchsichtige zweite Rahmenblende, beispielsweise einen an ihrem Rand umlaufenden, undurchsichtigen Randstreifen aufweisen. Die undurchsichtige zweite Rahmenblende der Trägerplatte verdeckt aus Gründen der Ästhetik einen Rand des Flachbildschirms, der keiner Darstellung dient. Die undurchsichtige zweite Rahmenblende umschließt und begrenzt ein Sichtfeld des Flachbildschirms und zugleich des Touchscreens.

Eine Ausgestaltung der Erfindung sieht eine undurchsichtige erste Rahmenblende in einem Randbereich des Touchscreens vor. Die erste Rahmenblende weist insbesondere undurchsichtige Streifen entlang der Ränder des Touchscreens vergleichbar einem Passepartout auf. Die erste Rahmenblende kann als Schicht zusätzlich oder anstelle der zweiten Rahmenblende der Trägerplatte zwischen dem Flachbildschirm und der Schutzschicht des Touchscreens vorgesehen sein. Die erste Rahmenblende kann beispielsweise teilflächig nur als Streifen entlang der Ränder des Touchscreens oder vollflächig mit einem transparenten Mittelbereich innerhalb der undurchsichtigen Ränder ausgeführt sein.

Um Schichten und Elemente des Touchscreens lagerichtig zueinander auszurichten beziehungsweise lagerichtig zueinander ausgerichtet zu halten sieht eine Ausgestaltung der Erfindung Ausrichtelemente vor. Die Ausrichtelemente richten insbesondere zumindest den Flachbildschirm und das Touchpad in einer vorgesehenen Lage zueinander aus um berührte Stellen der Schutzschicht deckungsgleichen Stellen des Flachbildschirms und des Touchpads zuordnen zu können.

Eine Ausgestaltung der Erfindung sieht ein elastisches Toleranzausgleichselement auf einer der Schutzschicht abgewandten Rückseite des Touchscreens vor. Das Toleranzausgleichselement gleicht Toleranzen in einer Dickenrichtung des Touchscreens aus, schützt den Touchscreen vor Stößen gegen seine Rückseite und/oder dient als Klapperschutz.

Der erfindungsgemäße Touchscreen ist insbesondere als Ein- und Ausgabeeinheit eines Tablets, Smartphones oder eines elektronischen Navigationsgeräts vorgesehen.

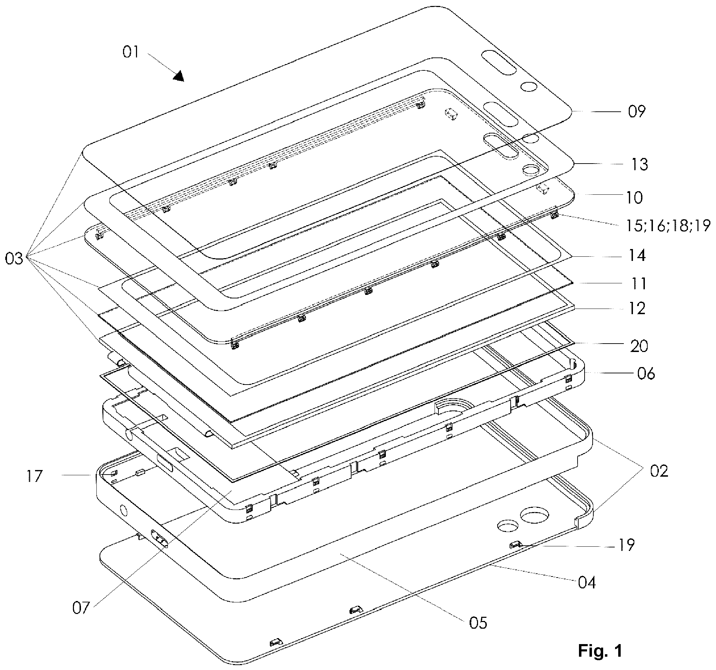

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Die einzige Figur zeigt eine perspektivische Explosionsdarstellung eines Smartphones mit einem Touchscreen gemäß der Erfindung.

Das in der Zeichnung dargestellte, erfindungsgemäße Smartphone 01 weist ein rechteckiges, flaches, schachtelförmiges Gehäuse 02 mit gerundeten Ecken auf, dessen Deckseite durch einen erfindungsgemäßen Touchscreen 03 nach Art eines Deckels verschlossen ist. Im Ausführungsbeispiel ist das schachtelförmige Gehäuse 02 zweistückig, es weist einen Gehäuseboden 04 und einen umlaufenden Gehäuserahmen 05 auf, der Seitenwände des Gehäuses 02 bildet. Ein einstückiges Gehäuse ist ebenso möglich (nicht dargestellt).

Innerhalb des Gehäuserahmens 05 ist in dem Gehäuse 02 ein Displayklemmrahmen 06 angeordnet, der eine Elektronik 07 des Smartphones 01 und einen Freiraum als Batterie- oder Akkufach 08 aufweist.

Der Touchscreen 03 weist eine transparente Schutzschicht 09, eine ebenfalls transparente Trägerplatte 10, ein Touchpad 11 und einen Flachbildschirm 12 auf, die in genannter Reihenfolge wie die Schichten eines Schichtbauteils deckungsgleich gestapelt aufeinander, das heißt mit ihren Flachseiten aneinander anliegend angeordnet sind. Anders als bei einem Schichtverbundbauteil sind nicht alle Schichten beziehungsweise Elemente des Touchscreens 03 verklebt oder in anderer Weise stoffschlüssig verbunden, sondern es sind zumindest die Schutzschicht 9 mit der Trägerplatte 10, das Touchpad 11 und der Flachbildschirm 12 zerstörungsfrei lösbar miteinander verbunden.

Im Ausführungsbeispiel besteht die Schutzschicht 09 aus einer kratzfesten Glasscheibe, die elastisch biegbar und elastisch in sich verdrehbar ist.

Die transparente Trägerplatte 10 ist im Ausführungsbeispiel durch Spritzgießen aus Kunststoff hergestellt.

Zwischen der Schutzschicht 09 und der Trägerplatte 10 ist eine undurchsichtige, im Ausführungsbeispiel schwarze erste Rahmenblende 13 vergleichbar einem Passepartout angeordnet. Die erste Rahmenblende 13 ist dünn, vorzugsweise dünner als die Schutzschicht 09 oder die Trägerplatte 10 und weist undurchsichtige Streifen auf, die entlang von Rändern des Touchscreens 03 beziehungsweise der Schutzschicht 09 und der Trägerplatte 10 verlaufen. Die erste Rahmenblende 13 umschließt ein Sichtfeld des Touchscreens 03, durch das der Flachbildschirm 12 sichtbar ist. Im Ausführungsbeispiel ist die erste Rahmenblende 13 beidseitig klebend und verbindet die Schutzschicht 09 mit der Trägerplatte 10.

Das Touchpad 11 ist eine berührungsempfindliche Folie, mit der ein Ort, an dem die Schutzschicht 09 mit beispielsweise einem Finger berührt wird, feststellbar ist. Im Ausführungsbeispiel ist das Touchpad 11 transparent, damit der Flachbildschirm 12 durch das Touchpad 11 hindurch sichtbar und ablesbar ist. Wird das Touchpad 11 auf einer der Schutzschicht 09 abgewandten Rückseite des Flachbildschirms 12 angeordnet, muss das Touchpad 11 nicht durchsichtig sein.

Der Flachbildschirm 12 ist ein dünner, plattenförmiger Bildschirm, im Ausführungsbeispiel eine Flüssigkristallanzeige (englisch: Liquid Crystal Display; abgekürzt: LCD). Andere Flachbildschirmarten wie Leuchtdioden (LED), organische Leuchtdioden (OLED) oder Plasmabildschirme sind ebenso möglich.

Auf einer dem Flachbildschirm 12 zugewandten Seite weist die Trägerplatte 10 eine undurchsichtige zweite Rahmenblende 14 auf, die deckungsgleich mit de zwischen der Schutzschicht 09 und der Trägerplatte 10 angeordneten ersten Rahmenblende 13 und die im Ausführungsbeispiel auf die Trägerplatte 10 gedruckt ist.

Die Trägerplatte 10 weist Rastelemente 15 an ihren Rändern auf. Dabei handelt es sich im Ausführungsbeispiel um elastische Laschen, die einstückig mit der Trägerplatte 10 sind und rechtwinklig von den Rändern der Trägerplatte 10 abstehen. Die Laschen weisen nach außen gerichtete Rasthaken 16 an ihren freien Enden auf, die in Rastausnehmungen 17 an Innenseiten des Gehäuserahmens 05 eingerastet sind bzw. werden. Dadurch halten die Rastelemente 15 die Trägerplatte 10, von deren Rändern sie einstückig abstehen, den Gehäuserahmen 05 bzw. das Gehäuse 02 sowie das Touchpad 11 und den Flachbildschirm 12, die sich zwischen der Trägerplatte 10 und dem Gehäuserahmen 05 befinden, zusammen. Über die Trägerplatte 10 verbinden die Rastelemente 15 auch die Schutzschicht 09, die auf die Trägerplatte 10 geklebt ist, mit dem Touchpad 11 und dem Flachbildschirm 12. Die Verbindung ist lösbar indem die Rastelemente 15 elastisch so weit nach innen und/oder der Gehäuserahmen 05 nach außen gebogen werden, dass die Rasthaken 16 der Rastelemente 15 aus den Rastausnehmungen 17 des Gehäuserahmens 05 ausrasten.

Die Rastelemente 15, die außen an dem Touchpad 11 und dem Flachbildschirm 12 vorbei treten, zentrieren die Trägerplatte 10, das Touchpad 11, den Flachbildschirm 12 und den Gehäuserahmen 05 bzw. das Gehäuse 02 bzw. richten die genannten Elemente zueinander aus.

Die Rastelemente 15 können allgemein auch als Verbinder 18 zu einem zerstörungsfrei lösbaren Verbinden der Trägerplatte 10, des Touchpads 11, des Flachbildschirms 12 und des Gehäuserahmens 05 bzw. des Gehäuses 02 aufgefasst werden, so dass diese Elemente einzeln getauscht werden können. Die mit der Trägerplatte 10 verklebte Schutzschicht 09 muss zusammen mit der Trägerplatte 10 getauscht werden.

Die Rastelemente 15 bilden zugleich auch Ausrichtelemente 19, die das Touchpad 11 und den Flachbildschirm 12 deckungsgleich und allgemein ausgedrückt lagerichtig zueinander ausgerichtet halten.

Zwischen dem Flachbildschirm 12 und dem Displayklemmrahmen 06 ist ein rechteckringförmiger Schaumstoffstreifen als Toleranzausgleichselement 20 angeordnet, mit dem das Touchpad 11 und der Flachbildschirm 12 zwischen der Trägerplate 10 und dem Displayklemmrahmen 06 elastisch und spielfrei eingespannt sind. Der Displayklemmrahmen 06 liegt auf dem Gehäuseboden 04 auf, der mit dem Gehäuserahmen 05 verrastet ist, der über die in die Rastausnehmungen 17 eingerasteten Rastelemente 15 mit der Trägerplatte 10 verbunden ist.

## Patentansprüche

1. Touchscreen mit einem Flachbildschirm (12), einem Touchpad (11) und einer transparenten Schutzschicht (09), die als Schichten gestapelt aufeinander angeordnet sind, **dadurch gekennzeichnet, dass** der Flachbildschirm (12), das Touchpad (11) und die Schutzschicht (09) zerstörungsfrei voneinander lösbar miteinander verbunden sind.

2. Touchscreen nach Anspruch 1, **dadurch gekennzeichnet, dass** der Touchscreen (3) Verbinder (18), die den Flachbildschirm (12), das Touchpad (11) und die Schutzschicht (09) zerstörungsfrei lösbar miteinander verbinden, an einem Rand des Touchscreens (3) aufweist.

3. Touchscreen nach Anspruch 2, **dadurch gekennzeichnet, dass** der Touchscreen (3) Rastelemente (15) als Verbinder (18) aufweist.

4. Touchscreen nach einem oder mehreren der vorhergehenden Ansprüche, **dadurch gekennzeichnet, dass** der Touchscreen (3) ein Gehäuse (02) aufweist, mit dem der Flachbildschirm (12), das Touchpad (11) und die Schutzschicht (09) lösbar verbunden sind.

5. Touchscreen nach einem oder mehreren der vorhergehenden Ansprüche, **dadurch gekennzeichnet, dass** der Touchscreen (3) eine transparente Trägerplatte (10) aufweist.

6. Touchscreen nach Anspruch 5, **dadurch gekennzeichnet, dass** die Trägerplatte (10) eine undurchsichtige zweite Rahmenblende (14) aufweist.

7. Touchscreen nach einem oder mehreren der vorhergehenden Ansprüche, **dadurch gekennzeichnet, dass** der Touchscreen (3) eine undurchsichtige erste Rahmenblende (13) in einem Randbereich des Touchscreens (3) aufweist.

8. Touchscreen nach einem oder mehreren der vorhergehenden Ansprüche, **dadurch gekennzeichnet, dass** der Touchscreen (3) Ausrichtelemente (19) aufweist, die das Touchpad (11) und den Flachbildschirm (12) zueinander ausrichten.

9. Touchscreen nach einem oder mehreren der vorhergehenden Ansprüche, **dadurch gekennzeichnet, dass** der Touchscreen (3) ein elastisches Toleranzausgleichselement (20) auf einer der Schutzschicht (09) abgewandten Rückseite aufweist.

10. Tablet, Smartphone (01) oder elektronisches Navigationsgerät mit einem Touchscreen (3) nach einem oder mehreren der vorhergehenden Ansprüche.
